# EUROPEAN PATENT APPLICATION

(11) **EP 2 224 350 A1**
(43) Date of publication of application: **01.09.2010**
(21) Application number: 09153647.4
(22) Date of filing: 25.02.2009
(51) Int. Cl.: G06F 17/30, G06F 17/27

(54) **Intelligent hyperlinking of dates in text**

(71) Applicant: RESEARCH IN MOTION LIMITED, Waterloo, Ontario N2L 3W8 (CA)
(72) Inventor: Jain Rohit, Waterloo Ontario N2L 5Z5 (CA); Hardy, Michael, Waterloo Ontario N2L 5Z5 (CA); Runstedler, Christopher, Waterloo Ontario N2L 5Z5 (CA)
(74) Representative: Patel, Binesh

(57) **Abstract**

A method, handheld electronic device and computer program product for allowing a user to view calendar data related to text the user is reading are provided. The method comprises: receiving an instruction to display a specified text; identifying at least one string in the specified text indicating date information; displaying the specified text with the date string presented as a hyperlink; and receiving user input activating the hyperlink and displaying calendar information related to the date indicated by the date string in response to the user input.

## Description

### TECHNICAL FIELD

The present application relates to a method, device, and computer program product for improved calendar user interface navigation, and, in particular, to a method, device, and computer program product for displaying date-related strings in text as hyperlinks and displaying calendar information in response to activation of these hyperlinks.

### BACKGROUND

Electronic devices capable of displaying calendar data are known in the art. These devices usually run software applications devoted to the management and display of a user's calendar data, such as appointments and events scheduled for specific dates and times. However, most of these devices require a user to specifically launch the calendar application in order to view calendar data; this often involves navigating away from the user's current task and engaging with a menu listing all of the device's applications, activating the calendar application, then selecting the desired date through the application's user interface. This process can be cumbersome if the user is engaged in reading text related to a specific date and wishes to briefly view calendar data related to that date. Thus, there exists a need for an improved system for displaying calendar data related to text a user is reading.

### BRIEF SUMMARY

In accordance with one embodiment of the present disclosure, there is provided a method for allowing a user of an electronic device to view calendar information while reading text, comprising receiving an instruction to display a specified text, identifying at least one string in the text wherein the at least one string comprises date information, displaying the text with the at least one string presented as a hyperlink, and receiving user input activating the hyperlink and displaying calendar information related to the date information in response to the user input.

In accordance with another embodiment of the present disclosure, there is provided an electronic device adapted to allow a user to view calendar information while reading text, comprising a processor for controlling the operation of the electronic device, a display connected to the processor, a user input device, and a memory connected to the processor, the memory having data and instructions stored thereon, the data and instructions configuring the processor to receive an instruction to display a specified text, identify at least one string in the text wherein the at least one string comprises date information, display the text with the at least one string presented as a hyperlink, and receive user input activating the hyperlink and display calendar information related to the date information in response to the user input.

In accordance with another embodiment of the present disclosure, there is provided a computer program product comprising a computer readable medium having stored thereon computer program instructions for implementing a method of allowing a user of an electronic device to view calendar information while reading text displayed on a display of an electronic device, the computer executable instructions comprising instructions for receiving an instruction to display a specified text, identifying at least one string in the text wherein the at least one string comprises date information, displaying the text with the at least one string presented as a hyperlink, and receiving user input activating the hyperlink and displaying calendar information related to the date information in response to the user input.

According to a further aspect of the application, the calendar information is the calendar data for a single day at the date indicated by the string.

According to a further aspect of the application, the calendar information is the calendar data for a week containing the date indicated by the string.

According to a further aspect of the application, the text is displayed again upon receiving a predetermined input from the user while the calendar information is being displayed.

According to a further aspect of the application, the text is one of the following: an electronic message, a task, a chat dialogue, a chat transcript, or a memo.

According to a further aspect of the application, displaying the text with the date string presented as a hyperlink comprises displaying the at least one string in a distinctive text style on a display of the device.

According to a further aspect of the application, the user input activating the hyperlink comprises positioning a cursor over the position of the at least one string on the display and depressing a depressible input mechanism.

According to a further aspect of the application, the display is touch-sensitive and the user input activating the hyperlink comprises touching the display in the position where the hyperlink is displayed.

### BRIEF DESCRIPTION OF THE DRAWINGS

Fig. 1 is a block diagram showing an example embodiment of an electronic device in accordance with the present application.

Fig. 2 is a simplified front view of an example embodiment of a mobile electronic device in accordance with the present application.

Fig. 3 is a flow chart showing the operation of a date hyperlinking system in accordance with the present application.

Fig. 4 is an example interface screen of the device of Fig. 2 showing example application icons.

Fig. 5a is an example calendar application interface screen showing a day view.

Fig. 5b is an example calendar application interface screen showing a week view.

Fig. 6a is an example messaging application interface screen showing a message view with a date hyperlink.

Fig. 6b is an example text application interface screen showing a task list with date hyperlinks.

### DETAILED DESCRIPTION OF EXAMPLE EMBODIMENTS

The present disclosure is directed to a method, device, and computer program product for allowing a user to view calendar data related to text the user is reading.

The present description of example embodiments does not limit implementation to any particular computer programming language or system architecture. Embodiments described in the specification are not limited to any particular operating system (OS), device architecture, or computer programming language.

Any references herein to "messages" are not intended to be limited to e-mail, but should be understood to include other types of electronic messages that one skilled in the art would understand to be possible in the context in which the term is used. For example, a message may be an instant message in a chat window, an SMS message, or a message on an online bulletin board or displayed on a web page.

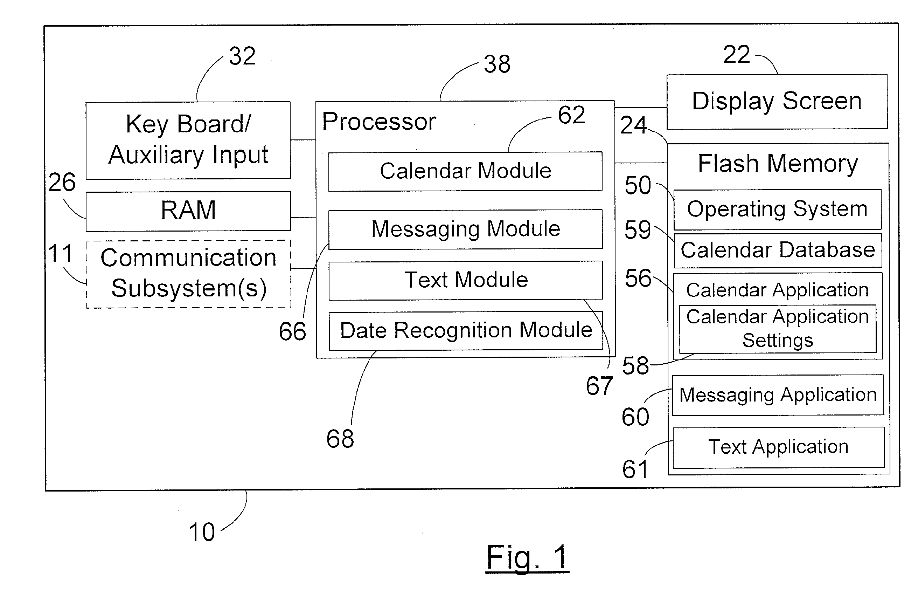

Referring now to the drawings, Figure 1 is a block diagram of an electronic mobile device 10 to which example embodiments can be applied. The mobile device 10 includes a controller that includes at least one microprocessor 38 (and possibly more than one microprocessor) that controls the overall operation of the device. The microprocessor 38 interacts with device subsystems such as a display 22, flash memory 24, random access memory (RAM) 26, communication subsystem(s) 11 and user input components 32 such as a keyboard or keypad and auxiliary on-screen navigation and selection input device(s) such as a trackball, touch screen, touch pad, directional button(s), joystick and/or scrollwheel.

The device 10 may comprise a touchscreen display in some embodiments. The touchscreen display may be constructed using a touch-sensitive input surface connected to an electronic controller and which overlays the display 22. The touch-sensitive overlay and the electronic controller provide a touch-sensitive input device and the microprocessor 38 interacts with the touch-sensitive overlay via the electronic controller.

Some examples of the mobile device 10 include those with a wireless communications subsystem 11 for exchanging communications with one or more communications networks including, for example, cellular type wide area wireless networks and/or wireless local area networks. In some examples, the mobile device 10 is a two-way, electronic communications device having data and possibly also voice communication capabilities. In some examples, the mobile device 10 has the capability to exchange messages with other devices and computer systems on the Internet. Depending on the functionality provided by the mobile device 10, in various examples the mobile device may be a multiple-mode communication device configured for both data and voice communications, a smartphone, a Personal Digital Assistant (PDA), or a mobile computer system among other things. In some examples, the device 10 is not a wireless communications device. For example, there exist PDAs and computers that are not capable of sending and receiving wireless communications.

Operating system software 50 and various software applications (for example, calendar application 56, messaging application 60, and text application 61) used by the microprocessor 38 are, in a number of example embodiments, stored in a persistent store such as the flash memory 24 or similar storage element. Those skilled in the art will appreciate that the operating system 50, other software applications, or parts thereof, may be temporarily loaded into a volatile store such as the RAM 26.

The microprocessor 38, in addition to its operating system functions, can enable execution of software applications (for example, the calendar application 56, the messaging application 60, and the text application 61) on the mobile device 10. A predetermined set of software applications which control basic device operations, including data and voice communication applications for example, will normally be installed on the mobile device 10. In some embodiments, the processor 38 is configured to implement a number of modules for interacting with the various device subsystems described above (or other device subsystems). In some embodiments, some or part of the functionality of a number of these modules can be implemented through firmware or hardware components instead of, or in combination with, computer software instructions executed by the microprocessor 38 (or other processors).

As a first module example, under instructions from the calendar application 56 resident on the mobile device 10, the processor 38 may be configured to implement calendar module 62. The calendar module 62 facilitates device user scheduling and reminding in relation to calendar events. In some examples, the calendar module 62 handles meeting invitations sent and received over a communication network, through the communication subsystem 11. Also, a database 59 adapted to store event data corresponding to entered event details can be maintained on the flash memory 24, the RAM 26 and/or some other computer readable medium such as a remotely located magnetic/optical-based disk drive, for example. The calendar module 62 is able to add, alter and delete event data in this database by way of action queries, for example. In some embodiments, the calendar module 62 does not provide the full features of a standard calendar application, but may be a simple date-display module that reads data from the database 59 and displays it on the display 22, without allowing the user to modify the data or to directly navigate to other calendar interface screens. Such a stripped-down calendar module 62 may coexist on a device with a more fully-featured calendar application, and both may use data from the same database 59.

As a second module example, under instruction from the messaging application 60 resident on the mobile device 10, the processor 38 may be configured to implement messaging module 66. The messaging module 66 enables composition of data items, such as e-mail messages for example. Such composed items may then be transmitted over a communication network through the communication subsystem 11. Conversely, messages can be received through the communication subsystem 11 for processing by the messaging module 66.

As a third module example, under instructions from the text application 61 resident on the mobile device 10, the processor 38 may be configured to implement text module 67. The text module 67 enables composition or display of textual content. This content may be plain text, hypertext, multimedia, or any other form that uses at least some text in its display. It may be implemented as a task list application, a text file editor, a web browser, or any other application that displays text. It will be appreciated that "text" refers to sequences of linguistic characters and notational symbols. The source of this text data may be a text or hypertext file, a data stream received over a communication link, data encoded in an application file stored in memory, data encoded in hardware firmware, or any other method of storing or receiving text data on an electronic device.

As a fourth module example, under instructions from a software application or the operating system 50 resident on the device 10, the processor 38 may be configured to implement date recognition module 68. The date recognition module 68 executes an algorithm capable of applying a grammar to a text data source and identifying text strings that contain calendar or date information. The module 68 may then make alterations to the original text data source or issue instructions to other modules or parts of the operating system 50 of the device 10 in response to the identification of calendar or date information in the text. For instance, upon identifying a string in a text data source as containing date information, the date recognition module may add hypertext markup tags bracketing the string to the text data source before passing the text data source on to another module for display or storage. The date recognition module 68 may be implemented as a stand-alone application or library of programming functions stored in memory, an integral part of the operating system 50, or part of one or more of the other applications on the device 10, such as the calendar application 56, the messaging application 60, or a text application 61.

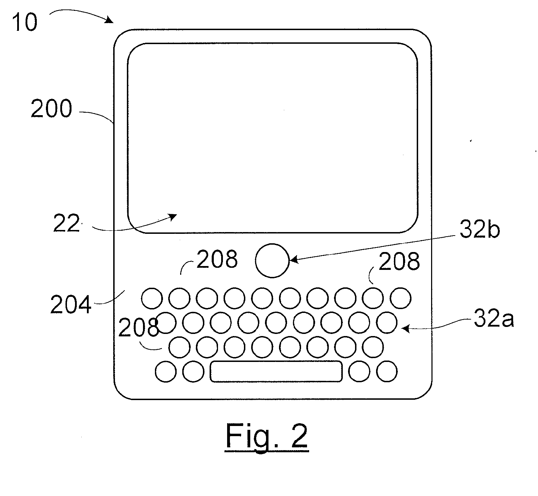

With reference now to Figure 2, in some examples, the components and subsystems of the device 10 are housed within a rigid case 200 that is configured to be held with one or two hands while the mobile device 10 is in use. The case 200 may be a single housing, or in some embodiments, could include parts that are pivotally or slidably connected together. The mobile device 10 is, in some examples, small enough to fit inside a standard purse or coat pocket, be clipped to a belt, and/or be mounted on a belt-worn holster. In the illustrated embodiment, alphanumeric keyboard or keypad 32a is horizontally positioned symmetrically between a left edge and a right edge of a face 204 of the mobile device 10. The keyboard 32a includes several keys 208 for user input of displayable numbers, letters or other characters.

In some embodiments, the mobile electronic device 10 also comprises a two-dimensional navigation tool, which in the shown embodiment comprises a depressible (or "clickable") rolling member or trackball 32b, which is used to move a cursor or focus across selectable items or fields of the graphical user interface (GUI) of the device 10. The trackball 32b in the shown embodiment is located substantially between the display screen 22 and the keyboard 32.

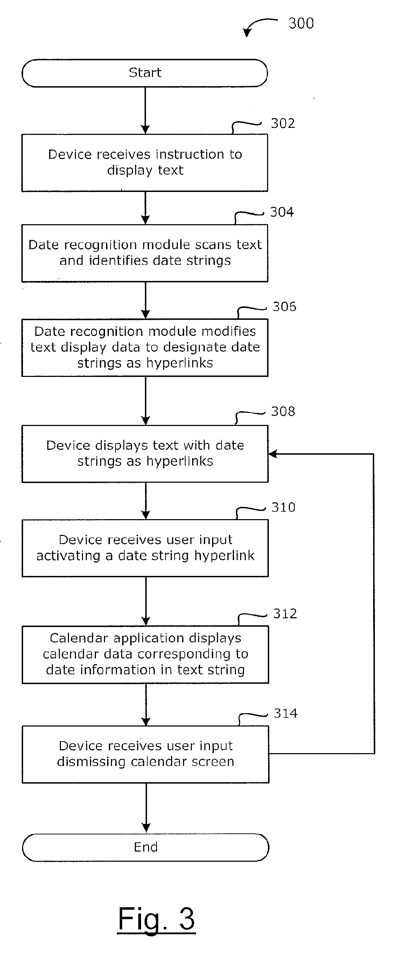

With reference again to the drawings, Figure 3 is a flow chart 300 showing the functional operation of an example embodiment of the invention. This embodiment is first triggered when the device 10 receives an instruction 302 to display a given text data source. This request may be initiated by the user, for example through user input instructing the text module 67 to load a text file into RAM 26 from the flash memory 24 and to display the text from the file on the display 22. The display instruction may also occur as a result of the user opening a messaging application or, if a messaging application is already open, as a result of receipt of a new message.

Before the text from the file or other text data source is displayed, the date recognition module 68 scans 304 the text data source, parsing the text using its grammar algorithm and identifying strings in the text that contain date or calendar information. The date recognition module 68 then modifies the text data 306, classifying these strings as comprising date information and providing instructions to display these strings as hyperlinks. This identification and instruction may take the form of metadata, such as markup tags, inserted into the text data itself, or of instructions passed directly to a rendering or formatting module responsible for presenting the text data to the display 22. For example, the date recognition module 68 may issue instructions to a GUI application programming interface (API) included as part of the operating system 50, instructing the GUI API to treat the specified text as an area of the screen responsive to user input when the GUI API is applying font layout and formatting to the text and calculating the resulting screen geometry.

After the hyperlink data has been added to the text data, the text is then displayed 308 on the display 22, relying on the formatting information created in the previous step 306 to format the date information strings as hyperlinks. It will be appreciated that, although the text source may be plain text, the text content may be displayed in a markup language format, such as HTML, XML, SGML, etc., so as to enable display of an active date hyperlink. In other embodiments, the text may be converted into a data format used by a display and layout subsystem that permits the creation of interactive graphical user interface elements such as hyperlinks.

In some instances, the date information located by the date recognition module 68 does not contain an explicit date. For example, the date recognition module 68 may identify date information such as "next Wednesday", or "Halloween", or "tomorrow". Accordingly, the date recognition module 68 may be configured to logically identify a specific date associated with the date information. Using a set of logic rules or other mechanisms, the date recognition module 68 may convert natural language date information into a specified date. The hyperlink created by the date recognition module 58 includes the specified date, so as to link the natural language text string to a specific date. Moreover, the hyperlink is configured to pass the specific date to the calendar module 62.

Upon receiving input from a user 310 activating one of the date hyperlinks, such as the depression of a clickable pointer device while the cursor is over the hyperlink, the device 10 activates the hyperlink, causing the calendar module 62 to display calendar data 312 related to the date information contained in the text hyperlink. This may be an interface screen to a fully-featured calendar application, or a stripped-down calendar data display module as described above that does not allow editing or navigation. As noted above, the hyperlink may contain or specify the specific date associated with natural language date information. When the hyperlink is activated by user input, the processor 38 calls or launches a calendar function, such as the calendar module 62. Moreover, the processor 38 passes the specific date to the calendar module 62, thereby enabling the calendar module to read/retrieve the specific event date stored in the calendar database 59 that corresponds to the specific date. The calendar module 62 may then display the specific event data retrieved from the calendar database 59. For example, the calendar module 62 may cause display of a calendar-format window or overlay containing the specific event data. Examples of calendar-format displays will be described further below.

In some embodiments, the device 10 is further configured to respond to a predetermined user input at the calendar data display step 312 by closing the calendar data display screen and returning to the text data display step 308. For instance, after viewing calendar data at step 312, the user may press the "Escape" key on the keyboard 32a, causing the device 10 to re-display the text screen, including the original date hyperlinks. This text module 67 interface screen may be held in RAM 24 in a windowing system, screen buffer or other display module while the calendar information screen is active on the display 22, thereby allowing the display 22 to simply repaint the text screen without having to re-load the data and re-render it with the processor 38.

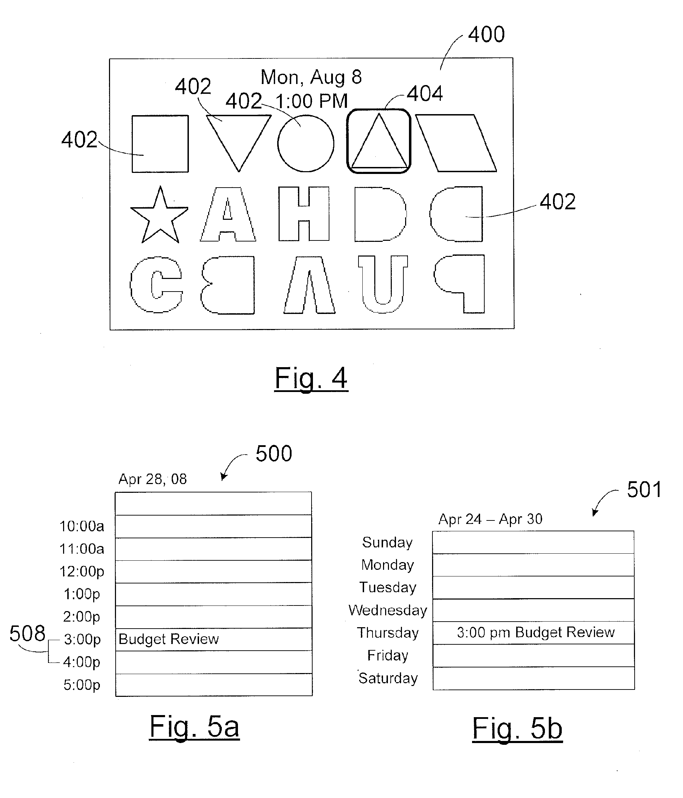

With reference to Figure 4, an example user interface screen 400 is generated by the operating system 50 to provide the device user with choices of applications that can be run. In the illustrated example, various applications each have an associated selectable icon 402. For instance, one of the icons 402 might be associated with the calendar application 56, another of the icons 402 might be associated with the messaging application 60, and another of the icons 402 might be associated with the text application 61. In at least one example, the device user can rotate the trackball 32b in any direction in two dimensions, causing selection symbol 404 to move through the icons 402 until it is positioned on the icon 402 associated with the application or function that the device user wants to launch. The device user can then depress the trackball 32b to select the icon that is highlighted or focused by the selection symbol 404. This input action is translated by the operating system 50 into a request for the application associated with the selected icon to be launched. In at least one example, one or more alternative input components can be operated to carry out the same application launch request, for instance, pressing of a combination of arrow keys and an Enter key or pressing one or more shortcut keys. Other modes of input, such as a touchscreen or a pointing device other than a trackball, could also be used to select an icon or field on the screen in a similar fashion to a trackball.

Once the operating system 50 launches the appropriate application or function, the user interface screen 400 on display 22 may be replaced by whatever interface screen is generated by the launched application. The device user would then typically proceed through further user interface screens of the application that was launched. For example, if the device user launches the calendar application 56, the device user may choose to navigate through a number of user interface screens in order to view or enter the details of various calendar events, or to view data attached to various dates or time periods. Similarly, a user who launches a messaging application 60 or text application 61 will be presented with an interface screen for that application, but may choose to navigate through a number of interface screens in order to view or edit the content of a number of messages or data sources containing text.

An example interface screen 500 generated on the display 22 by the calendar application 56 is shown in Figure 5a. Within the screen 500 is a two column table representing a calendar day, with rows in the table representing calendar entries. The left hand column lists times at intervals of one hour, and the time period being from 9:00 AM through to 5:00 PM for the date of April 28, 2008 (however any suitable time intervals and time period are contemplated). The right hand column is for short subject descriptions corresponding to the respective times in the left hand column. It will be understood that a calendar event has been entered in relation to 3:00 PM because the words "Budget Review" appear in the same row in the right hand column and bracket 508 indicates that this calendar event will occur between 3:00 and 4:00 PM.

A second example startup screen 501 generated on the display 22 by the calendar application 56 is shown in Figure 5b. Within the screen 501 is a two column table representing a calendar week, with rows in the table representing days. The left hand column lists days of the week, from Sunday through Saturday. The right hand column shows any events scheduled for the respective days in the left hand column. It will be understood that a calendar event has been entered in relation to Thursday, April 28 at 3:00 PM because the words "3:00 pm Budget Review" appear in the Thursday row in the right hand column.

It will be understood that the calendar application 56 need not be a distinct application launchable by way one of the icons 402 within the screen 400 (Figure 4) of the operating system 50: the calendar application 56 may, for example, be an integrated component of the messaging application 60 or an integral part of the operating system 50. Some or all of the functionality of applications 56, 60, and 61 may in some embodiments be incorporated into a personal information management ("PIM") application.

In other embodiments, the start-up calendar interface screen may be a Month View, Agenda View or other view. While not explicitly shown, persons ordinarily skilled in the art would be familiar with arrangements and configurations for implementing calendar user interface screens for such views. When a different view is currently displayed on the display screen 22, the user may navigate to the Day View for a particular day, for example, using a context-sensitive menu.

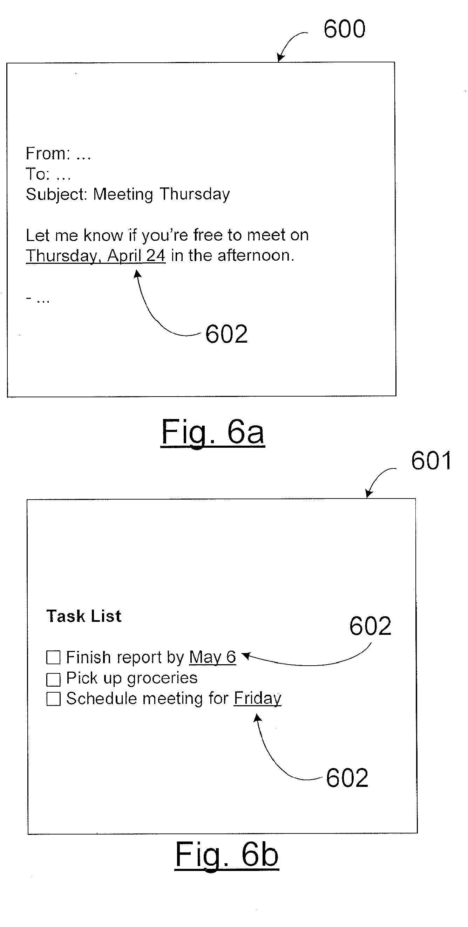

An example message interface screen 600 generated on the display 22 by the messaging application 60 is shown in Figure 6a. Within the screen 600 is the text of a message sent to the email account of the user of the device. The message headers are shown at the top of the screen, showing the sender, recipient, and subject of the message. The message body is shown beneath the headers. In this example, the text of the message body is displayed with a text string 602 corresponding to a date ("Thursday, April 24") displayed in a distinctive style, shown here as underlining. This stylistic formatting of the text is not present in the original message, but has been applied to the message text by the device before displaying the message data. In some embodiments, the string "Thursday" in the message subject line could also be shown with this distinctive text style.

An example text application interface screen 601 generated on the display 22 by the text application 61 is shown in Figure 6b. Here, the text application 61 is a Task List application, showing information on tasks the user needs to complete. Within the screen 601 is a series of text entries detailing the tasks, with a checkbox positioned to the left of each task. Each text string 602 in each task entry that corresponds to a date is displayed with a distinctive text style, shown here as underlining. As in the example messaging screen 600 described above, this stylistic formatting of the text is not present in the original document or data source, but has been applied to the source text by the device before displaying the data.

While underlining has been used to show the distinctive text style given to date text strings in Figures 6a and 6b, any other distinctive style or marking could be used to distinguish a string of text from other text on the screen, including text coloration, font size, typeface, capitalization, background highlighting, or symbols displayed near the text string.

In use, these text strings 602 displayed in a distinctive style by the text application 61 or messaging application 60 operate as hyperlinks to the calendar application 56. A user can activate one of these hyperlinks by using the trackball 32b or other interface device to move a cursor to the area of the screen where the hyperlink is displayed and select the hyperlink by depressing the trackball or using some other input method to select the hyperlink. Alternatively, on a device with a touchscreen, the user can apply pressure to the display 22 in the area where the hyperlink is displayed.

The device 10 responds to the activation of one of these hyperlinks by causing the calendar module 62 to display a calendar interface screen showing calendar data corresponding to the date indicated by the hyperlink. This calendar interface screen may be a day view 500 or week view 501, depending on the configuration of the device and the content of the text string, or it could be some other screen generated by the calendar module 62.

The mapping of text strings 602 to calendar dates may be accomplished either in the calendar application 56, in the messaging 60 or text 61 application displaying the hyperlink, or in some other module on the device, such as a standard programming library or date recognition module 68 used by the operating system 50. This mapping might be applied at the time the hyperlink is first created in the text data 306, or only when the calendar module 62 is activated by activation of the hyperlink 310. Numerous schemes are possible for this mapping. In an example mapping, a string 602 indicating a day of the week (e.g. "Friday" or "Fri.") is mapped to that day in the current week. In another example mapping, it is mapped to that day in a week corresponding to the date the text source data or message was created or received.

The calendar application 56 may also display a different calendar interface view - a "week" view 501 rather than a "day" view 500, for instance - depending on the content of the text string 602. Thus, one example embodiment might display a "week" view 501 when a hyperlink with the text "the week of December 12" is activated, but a "day" view 500 when a hyperlink with the text "December 12" is activated. Similarly, the calendar application 56 might be configured to display a "month" view when the text string 602 includes only an indication of a month, or of a month in a specific year (e.g. "April" or "April 2008").

The classification of a given text string 602 as comprising date information, resulting in its being displayed as a date hyperlink, may be performed by the messaging 60 or text 61 application displaying the text, or it may be applied uniformly to all text displayed on the device through a standard text-display module implemented, e.g., as part of the operating system 50. The text of the message or other data being displayed is processed by a date recognition module 68 adapted to recognize text strings indicating calendar or date data 602. This date recognition module 68 may scan for names of days of the week or months, and for abbreviations of the same. It may also use a much more complex natural-language parsing grammar. Text strings 602 classified as date strings might be limited to those indicating a specific date, or to those indicating at least a month or day, or the category may be as broad as to indicate large spans of time (e.g. "early next year"). It may recognize specific days not indicated by a date (e.g. "Earth Day 2007"), or even periods of time ("spring break"). In making these decisions, the date recognition module 68 may rely on data present in the calendar application 56 itself, including event data entered by the user. Thus, the date recognition module 68 might recognize references to specific events and direct the text 61 or messaging 60 application to display these strings 602 as hyperlinks that, when activated, display an "event" view in the calendar application 56.

The operation of both the date recognition module 68 and the string-to-date mapping function may operate according to any of a number of pattern-matching or natural language processing algorithms. Some example embodiments of such algorithms are described in Adams et al, US 2007/0073810 A1, published 29 March 2007, which is hereby incorporated by reference.

Upon displaying an interface screen following activation of a date hyperlink, the calendar application 56 may be configured to "close" upon receiving a predetermined user input, causing the display 22 to re-display the previous screen featuring the hyperlink. This predetermined user input may be provided by a specific key on the keyboard 32a, an option chosen from a menu using the keyboard 32a and/or a navigation and selection device 32b, a special key, or any other input method. In one example, the "Escape" key on the keyboard 32a performs this function. In a different embodiment, the calendar interface screen is only displayed as long as the user keeps the trackball 32b depressed, returning to the original messaging 60 or text 61 application screen when the trackball 32b is released.

In some embodiments, the displayed calendar data may be retrieved from a calendar database 59 stored locally on the mobile electronic device 10. In at least some embodiments the locally stored calendar database 59 is periodically synchronized with a corresponding calendar database maintained at a different device connected to the present device via a communication link. In some embodiments, when the device user views a calendar interface screen at the mobile electronic device 10, at least some of the displayed calendar data are retrieved wirelessly over a wireless data network from a database maintained at a server system or computer.

A "computer readable medium" as used herein means any medium which can store instructions for use by or execution by a computer or other computing device including, but not limited to, a portable computer diskette or hard disk drive (HDD), a random access memory (RAM), a read-only memory (ROM), an erasable programmable-read-only memory (EPROM) or flash memory, an optical disc such as a compact disc (CD) or digital versatile disc (DVD), and a solid state storage device (e.g., NAND flash or synchronous dynamic RAM (SDRAM)).

A "hyperlink," as used herein means any graphical user interface element that allows someone viewing a first document or data source to view a second document or data source, or to issue some other command to the device on which the hyperlink is displayed, by activating the hyperlink. A hyperlink is typically activated by selecting it on the screen using a user input subsystem; this may involve, for instance, positioning a cursor on top of the hyperlink using a pointer device and depressing a depressible user input element. The visual form of a hyperlink may be text, an image or icon, a button, or any other graphical user input element.

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a subcombination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method for allowing a user of an electronic device (10) to view calendar information while reading text, comprising:
receiving an instruction to display a specified text (302);
identifying at least one string (602) in the specified text, wherein the at least one string (602) comprises date information (304);
displaying the specified text with the at least one string (602) presented as a hyperlink (308); and
receiving user input activating the hyperlink (310) and displaying calendar information related to the date information in response to the user input (312).

2. The method of claim 1, wherein identifying (304) comprises searching the specified text for date-related text, locating the at least one string (602) containing the date information, and modifying the specified text to create the hyperlink (306).

3. The method of claim 2, wherein modifying (306) comprises inserting at least one markup language tag to create the hyperlink.

4. The method of any one of claims 1 to 3, wherein the hyperlink includes a link to a calendar module (62) and a reference to a date specified by the date information.

5. The method of claim 2, wherein searching includes applying a natural language date-recognition process to the specified text, and wherein locating includes determining a date specified by the at least one string (602).

6. The method of any one of claims 1 to 5, wherein the calendar information is the calendar data for a single day indicated by the date information.

7. The method of any one of claims 1 to 6, further comprising the step of displaying the text again upon receiving a predetermined user input while the calendar information is being displayed (314).

8. The method of any one of claims 1 to 7, wherein the specified text is one of the following: an electronic message, a task, a chat dialogue, a chat transcript, or a memo.

9. The method of any one of claims 1 to 8, further including storing event data in a calendar database (59), and wherein displaying calendar information includes retrieving selected event data from the calendar database (59), wherein the selected event data comprises event data for a date indicated by the date information.

10. An electronic device adapted to allow a user to view calendar information while reading text, comprising:
a processor (38) for controlling the operation of the electronic device;
a display (22) connected to the processor;
a user input device (32); and
a memory (24) connected to the processor (38), the memory (24) having data and instructions stored thereon, the data and instructions configuring the processor (38) to carry out the methods of any one of claims 1 through 9.

11. A computer program product comprising a computer readable medium having stored thereon computer program instructions for implementing a method of allowing a user of an electronic device to view calendar information while reading text displayed on a display screen of an electronic device, the computer executable instructions comprising instructions for carrying out any one of the methods of claims 1 through 9.

## Amended claims

### Amended claims in accordance with Rule 137(2) EPC.

**1.** A method for allowing a user of an electronic device (10) to view calendar information while reading text, comprising:
storing event data in a calendar database (59);
receiving an instruction to display a specified text (302);
identifying at least one string (602) in the specified text, wherein the at least one string (602) comprises date information (304);
displaying the specified text with the at least one string (602) presented as a hyperlink (308);
receiving user input (312) activating the hyperlink (310); and
in response to the user input (312),
retrieving from the calendar database (59) calendar information comprising selected event data for a date indicated by the date information, and
displaying the calendar information.

**2.** The method of claim 1, wherein identifying (304) comprises searching the specified text for date-related text, locating the at least one string (602) containing the date information, and modifying the specified text to create the hyperlink (306).

**3.** The method of claim 2, wherein modifying (306) comprises inserting at least one markup language tag to create the hyperlink.

**4.** The method of any one of claims 1 to 3, wherein the hyperlink includes a link to a calendar module (62) and a reference to a date specified by the date information.

**5.** The method of claim 2, wherein searching includes applying a natural language date-recognition process to the specified text, and wherein locating includes determining a date specified by the at least one string (602) .

**6.** The method of any one of claims 1 to 5, wherein the calendar information is the calendar data for a single day indicated by the date information.

**7.** The method of any one of claims 1 to 6, further comprising the step of displaying the text again upon receiving a predetermined user input while the calendar information is being displayed (314).

**8.** The method of any one of claims 1 to 7, wherein the specified text is one of the following: an electronic message, a task, a chat dialogue, a chat transcript, or a memo.

**9.** An electronic device adapted to allow a user to view calendar information while reading text, comprising:
a processor (38) for controlling the operation of the electronic device;
a display (22) connected to the processor;
a user input device (32); and
a memory (24) connected to the processor (38), the memory (24) having data and instructions stored thereon, the data and instructions configuring the processor (38) to carry out the methods of any one of claims 1 through 8.

**10.** A computer program product comprising a computer readable medium having stored thereon computer program instructions for implementing a method of allowing a user of an electronic device to view calendar information while reading text displayed on a display screen of an electronic device, the computer executable instructions comprising instructions for carrying out any one of the methods of claims 1 through 8.
